**Europäisches Patentamt**

**European Patent Office**

**Office européen des brevets**

(11) Veröffentlichungsnummer: **0 123 866**
**B1**

# (12) EUROPÄISCHE PATENTSCHRIFT

(45) Veröffentlichungstag der Patentschrift:
11.06.86

(21) Anmeldenummer: 84103026.5

(22) Anmeldetag: 20.03.84

(51) Int. Cl.⁴: **B 60 T 17/08,** B 60 T 13/24,
F 16 D 65/32, F 15 B 15/10

54 Druckluftzylinder, insbesondere Druckluftbremszylinder.

(30) Priorität: 27.04.83 DE 3315176

(43) Veröffentlichungstag der Anmeldung:
07.11.84 Patentblatt 84/45

(45) Bekanntmachung des Hinweises auf die Patenterteilung:
11.06.86 Patentblatt 86/24

(84) Benannte Vertragsstaaten:
DE FR IT NL SE

(56) Entgegenhaltungen:
DE - A - 2 904 805
DE - B - 1 035 496
DE - C - 58 926
DE - C - 1 000 245
FR - A - 2 160 222

(73) Patentinhaber: KNORR-BREMSE AG, Moosacher
Strasse 80 Postfach 401060, D-8000 München 40 (DE)

(72) Erfinder: Nell, Kuno, Herzog-Stephan-Weg 20,
D-8011 Zorneding (DE)

## Beschreibung

Die Erfindung bezieht sich auf einen Druckluftzylinder, insbesondere Druckluftbremszylinder für Kraftfahrzeugbremsanlagen, mit einem eine druckluftbeaufschlagbare Arbeitskammer gegen eine über eine Entlüftungseinrichtung zur Atmosphäre entlüftbare Außendruckkammer abgrenzenden Kolben und mit einem den Kolben überbrückenden Verbindungskanal zwischen Arbeits- und Außendruckkammer, dessen Durchgang vom Absperrventil eines Differenzdruckventils überwacht ist, das einen verschieblichen, in Schließrichtung vom Arbeitskammerdruck entgegen dem Druck in der Außendruckkammer und der Kraft einer Feder belasteten Ventilkörper aufweist.

Ein derartiger Druckluftzylinder ist aus der DE-A- 29 04 805 bekannt. Der axial im Kolben und einem Teil der Kolbenstange verlaufende Verbindungskanal weist hierbei nahe seiner arbeitskammerseitigen Mündung einen erweiterten Bereich auf, in welchem ein topfartiger Ventilkörper verschieblich geführt ist. Der bodenseitig an die Arbeitskammer angrenzende Ventilkörper trägt an der Stirnseite seines Topfrandes einen O-Ring, welcher zusammen mit einer ebenen Ringfläche des Kolbens das Absperrventil des Differenzdruckventils bildet. Eine zwischen dem Kolben und dem Ventilkörper eingespannte Feder belastet letzteren in Verschieberichtung zur Arbeitskammer. Die Außendruckkammer des bekannten Druckluftzylinders ist über ein in Schließrichtung leicht vorgespanntes Rückschlagventil mit der freien Atmosphäre verbunden.

Bei den bekannten Differenzdruckventilen bestehen die Forderungen, daß sie einerseits zu Beginn von Druckluftbeaufschlagungen der Arbeitskammer bei noch sehr geringen Arbeitskammerdrücken entgegen der Federbelastung schließen sollen, andererseits jedoch beim Entlüften der Arbeitskammer und eventuell auftretendem Unterdruck in der Außenluftkammer unter der Federkraft sicher und rasch öffnen sollen. Das Differenzdruckventil des bekannten Druckluftzylinders vermag diese Forderungen nur unzureichend zu erfüllen.

Der Erfindung liegt die Aufgabe zugrunde, einen Druckluftzylinder der eingangs angegebenen Art in einfacher Weise derart auszugestalten, daß das Differenzdruckventil zu Beginn von Druckluftbeaufschlagungen der Arbeitskammer sehr rasch und sicher, bei noch sehr geringen Arbeitskammerdrücken schließt, beim nachfolgenden Entlüften der Arbeitskammer trotz eventuellen, geringen Unterdrücken in der Außendruckkammer jedoch auch wieder sicher öffnet.

Diese Aufgabe wird nach der Erfindung dadurch gelöst, daß der Ventilkörper mit einer durch einen Drosselspalt umströmbaren Stauscheibe mechanisch verbunden ist, die in einer in Serie zum Absperrventil in den Verbindungskanal eingeordneten Kammer verschieblich angeordnet ist.

Die nach weiteren Merkmalen der Erfindung vorteilhafte, weitere Ausgestaltung des Druckluftzylinders ist den Unteransprüchen entnehmbar.

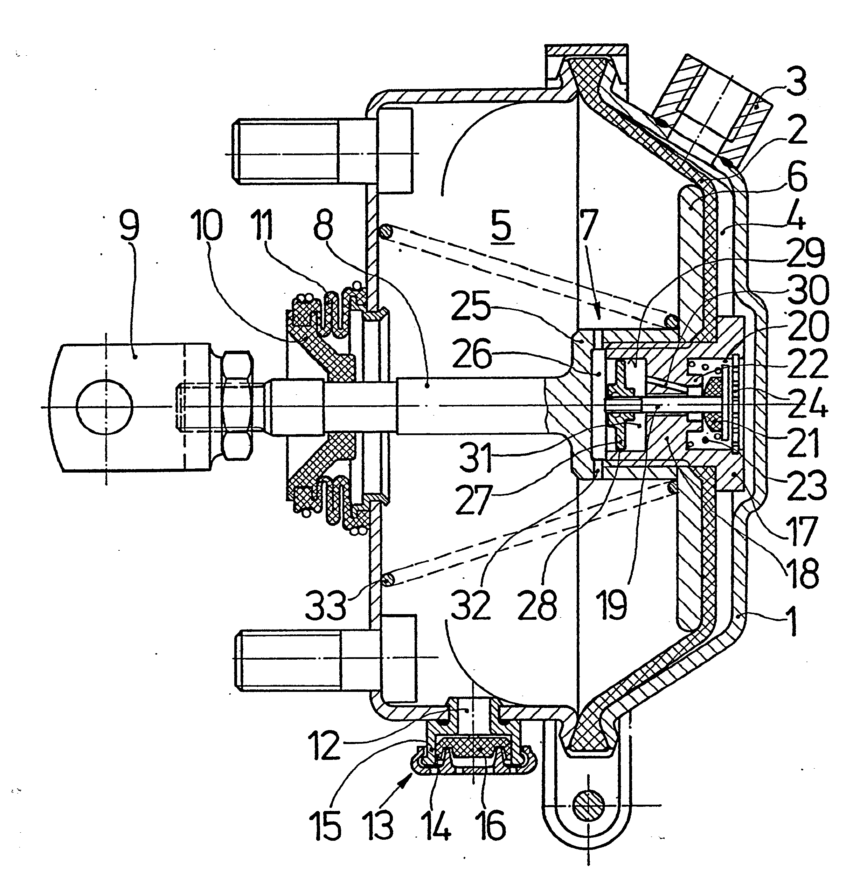

In der Zeichnung ist ein Ausführungsbeispiel für einen nach der Erfindung ausgebildeten Druckluftzylinder dargestellt. In einem Gehäuse 1 ist ein als Membrankolben ausgebildeter Kolben 2 gehalten, der eine über einen Rohranschluß 3 mit Druckluft beaufschlagbare Arbeitskammer 4 von einer Außendruckkammer 5 abtrennt. Der Kolben 2 weist seitens der Außendruckkammer 5 einen Membranteller 6 auf, an welchen sich ein topfartiger Endabschnitt 7 einer Kolbenstange 8 anschließt. Die Kolbenstange 8 durchragt die Außendruckkammer 5 und trägt kurz vor ihrem Kolbenstangenkopf 9 eine aus Kunststoffmaterial gefertigte Scheibe 10, auf gelche ein sich zum Gehäuse 1 erstreckender Faltenbalg 11 aufgeknöpft ist. Von der Außendruckkammer 5 führt eine Öffnung 12 über eine Entlüftungseinrichtung 13 zur Atmosphäre; die Entlüftungseinrichtung 13 beinhaltet eine mit einer umlaufenden Dichtlippe 14 an einer zylindrischen Wandung 15 anliegende Gummiplatte 16, gobei die Dichtlippe 14 bei Auftreten einer Luftströmung von der Außenluftkammer 5 zur freien Atmosphäre von der Wandung 15 elastisch abklappen kann.

Der Kolben 2 umfaßt ein stopfenartiges, seine Membrane mit dem Membranteller 6 mit dem Endabschnitt 7 verbindendes Schraubteil 17, welches von seiten der Arbeitskammer 4 in den Endabschnitt 7 eingeschraubt ist. Das Schraubteil 17 weist eine Querwand 18 auf, in welcher axial verschieblich der mittlere Abschnitt einer Stange 19 gelagert ist. Arbeitskammerseitig trägt die Stange 19 an ihrem Ende in einer Ausnehmung 20 des Schraubteiles 19 einen Ventilteller 21, der mit einem axial vorspringenden, an der Quergand 18 befindlichen Ventilsitz 22 zum Bilden eines Absperrventils 21, 22 eines Differenzdruckventils zusammenzugirken vermag. Radial außerhalb des Ventilsitzes 22 befindet sich eine schwache Feder 23, welche den Ventilteller 21 von der Querwand 18 abspreizt. Arbeitskammerseitig ist die Ausnehmung 20 von einem in das Schraubteil 17 eingelassenen Siebblech 24 abgedeckt. Andererseits ragt die Stange 19 in eine von der Querwand 18 und vom Boden 25 des Endabschnittes 7 begrenzte Kammer 26, in welcher sie an ihrem Ende eine Stauscheibe 27 trägt. Der radial äußere Rand der Stauscheibe 27 steht mit geringem, einen Drosselspalt 28 bildenden Abstand der Wandung 29 der Kammer 26 gegenüber. Vom vom Ventilsitz 22 umschlossen Raum führt eine Bohrung 30 durch die Querwand 18 zum arbeitskammerseitigen Raum 31 zwischen der Querwand 18 und der Stauscheibe 27 in der Kammer 26. Der anderseitige, zwischen der Stauscheibe 27 und den Boden 25 befindliche Raum der Kammer 26 steht über Querbohrungen 32 mit der Außendruckkammer 5 in Verbindung.

Der Durchmesser des Ventilsitzes 22 ist wesentlich kleiner als der Durchmesser der Stauscheibe 27, so daß bei geschlossenem Absperrventil 21, 22 an diesem wesentlich kleinere Beaufschlagungsflächen vorhanden sind, als sie die Stauscheibe 27 zur Verfügung stellt.

In der Außendruckkammer 5 befindet sich eine Kolbenrückdruckfeder 33, welche sich einerseits am Gehäuse 1 und andererseits am Membranteller 6 abstützt und welche den Kolben 2 in Verschieberichtung zur Arbeitskammer 4 belastet.

Bei unbeaufschlagter Arbeitskammer 4 befindet sich der Kolben 2 des Druckluftzylinders in seiner in der Zeichnung dargestellten, rechten Endstellung. Das Absperrventil 21, 22 ist unter der Kraft der Feder 23 geöffnet, so daß die Arbeitskammer 4 durch das Absperrventil 21, 22, die Bohrung 30, den Raum 31, den Drosselspalt 28 und die Querbohrung 32 mit der Außendruckkammer 5 in Verbindung steht. Zu Beginn einer Druckbeaufschlagung der Arbeitskammer 4 strömt eine vernachlässigbar geringe Luftmenge durch den vorstehend aufgezeigten Weg von der Arbeitskammer 4 zur Außendruckkammer 5 und von dieser an der von der Wandung 15 abklappenden Dichtlippe 14 vorbei zur Atmosphäre. Infolge der Wirkung des Drosselspaltes 28 und des Volumens des Raumes 31, durch welchen ein Vermindern der Strömungsgeschwindigkeit der ihn durchsetzenden Luft bis auf sehr geringe Werte und ein dementsprechender Druckanstieg bewirkt wird, ergibt sich im Raum 31 ein die Stauscheibe 27 nach links belastender Überdruck, welcher im Verein mit einem sich am Absperrventil 21, 22 durch die Strömung aufbauenden, am Ventilteller 21 in Schließrichtung des Absperrventils 21, 22 angreifenden Differenzdruck sehr schnell ausreicht, das Absperrventil 21, 22 entgegen der Kraft der Feder 23 unter entsprechender Verschiebung der Stange 19 und der Stauscheibe 27 zu schließen. Das Absperrventil 21, 22 schließt also bereits bei Erreichen eines sehr niedrigen Druckes in der Arbeitskammer 4 und sperrt die Verbindung von letzterer zur Außendruckkammer 5 ab; während dieses Schließvorganges oder auch anschließend beginnt sich der Kolben 2 unter der Druckbeaufschlagung der Arbeitskammer 4 nach links zu verschieben. Im weiteren arbeitet der Druckluftzylinder in üblicher, bekannter Weise.

Beim nachfolgenden Druckabbau in der Arbeitskammer 4 wird der Kolben 2 durch die Kolbenrückdruckfeder 33 und die gegebenenfalls über den Kolbenstangenkopf 9 auf die Kolbenstange 8 einwirkende Rückdruckkraft in seine rechte Endlage zurückgedrückt; während dieses Vorganges bzw. anschließend, bei Erreichen eines nur geringfügig über Atmosphärendruck liegenden Druckes in der Arbeitskammer 4, vermag die Feder 23 den Ventilteller 21 vom Ventilsitz 22 abzuheben und somit das Absperrventil 21, 22 zu öffnen. Der während der Hubbewegung des Kolbens 2 nach rechts in der Außendruckkammer 5 eventuell auftretende, geringe Unterdruck wirkt im geschlossenen Zustand des Absperrventils 21, 22 lediglich auf die kleine, vom Ventilsitz 22 umschlossene Fläche am Ventilteller 21 ein und bewirkt hier nur eine kleine, von der Feder 23 leicht zu überwindende Schließkraft für das Absperrventil 21 22 die Stauscheibe 27 übt keine das öffnen des Absperrventils 21 Kraft aus. Nach öffnen des Absperrventils 21, 22 strömt noch etwas Luft aus der Arbeitskammer 4 durch das Absperrventil 21, 22 zur Außendruckkammer 5, wodurch in dieser jedenfalls wieder Atmosphärendruck erreicht wird.

Es ist selbstverständlich, daß anstelle des Membrankolbens im vorstehend beschriebenen Ausführungsbeispiel auch ein fester, in einem Zylinder abgedichtet gleitverschieblich gelagerter Kolben vorgesehen sein kann.

**Bezugszeichenliste**

Gehäuse    2 Kolben    3 Rohranschluß
4 Arbeitskammer
5 Außendruckkammer    6 Membranteller
7 Endabschnitt
8 Kolbenstange
9 Kolbenstangenkopf
10 Scheibe
11 Faltenbalg
12 öffnung
13 Entlüftungseinrichtung
14 Dichtlippe
15 Wandung
16 Gummiplatte
17 Schraubteil
18 Querwand
19 Stange
20 Ausnehmung
21 Ventilteller
22 Ventilsitz
21, 22 Absperrventil
23 Feder
24 Lochblech
25 Boden
26 Kammer
27 Stauscheibe
28 Drosselspalt
29 Wandung
30 Bohrung
31 Raum
32 Querbohrung
33 Kolbenrückdruckfeder

**Patentansprüche**

1. Druckluftzylinder, insbesondere Druckluftbremszylinder für Kraftfahrzeugbremsanlagen, mit einem eine druckluftbeaufschlagbare Arbeitskammer (4) gegen eine Über eine Entlüftungseinrichtung (13) zur Atmosphäre entlüftbare Außendruckkammer (5) abgrenzenden Kolben (2) und mit einem den Kolben überbrückenden Verbindungskanal zwischen Arbeits- und Außendruckkammer, dessen Durchgang vom Absperrventil (21, 22) eines Differenzdruckventils überwacht ist, das einen verschieblichen, in Schließrichtung vom Arbeitskammerdruck entgegen dem Druck in der Außendruckkammer und der Kraft einer Feder (23) belasteten Ventilkörper (Ventilteller 21) aufweist, dadurch gekennzeichnet, daß der Ventilkörper (Ventilteller 21) mit einer durch einen Drosselspalt (28) umströmbaren Stauscheibe (27) mechanisch verbunden ist, die in einer in Serie zum Absperrventil (21, 22) in den Verbindungskanal eingeordneten Kammer (26) verschieblich angeordnet ist.

2. Druckluftzylinder nach Anspruch 1, dadurch gekennzeichnet, daß das Absperrventil (21, 22) einen bezogen auf den Durchmesser der Stauscheibe (27) kleinen Dichtungsdurchmesser aufweist.

3. Druckluftzylinder nach Anspruch 1 oder 2. dadurch gekennzeichnet, dass in Strömungsrichtung von der Arbeitszur Außendruckkammer (4, 5) das Absperrventil (21, 22) vor der die Stauscheibe (27) aufweisenden Kammer (26) in den VerbindungsKanal eingeordnet ist.

4. Druckluftzylinder nach Anspruch 3, dadurch gekennzeichnet, daß der arbeitskammerseitig an die Stauscheibe (27) angrenzende Raum (31) der Kammer (26) ein zum Verzögern und Beruhigen der ihn durchströmenden Luft ausreichendes Volumen aufweist.

5. Druckluftzylinder nach Anspruch 3 oder 4, dadurch gekennzeichnet, daß der als Ventilteller (21) ausgebildete Ventilkörper des Absperrventils (21, 22) und die Stauscheibe (27) an den beiden Enden einer Stange (19) angeordnet sind, die in ihrem mittleren Abschnitt verschieblich in einer Querwand (18) eines im wesentlichen stopfenartigen, in den Kolben (2) koaxial von seiten der Arbeitskammer (4) eingeschraubten Schraubteiles (17) gelagert ist, wobei die Querwand arbeitskammerseitig einen mit dem Ventilteller (21) zusammenwirkenden Ventilsitz (22) aufweist und anderseitig den arbeitskammerseitig an die Stauscheibe angrenzenden Raum (31) begrenzt.

## Claims

1. Compressed air cylinder, particularly a compressed air cylinder for motor vehicle brake systems, comprising a piston (2) shutting off an air-loadable working chamber (4) from an external pressure chamber (5) which can be vented to atmosphere via a venting device (13), and comprising a connecting bore bypassing the piston between working chamber and external pressure chamber, the passage in the said bore being monitored by the shutoff valve (21, 22) of a differential pressure valve which has a movable valve body (valve head 21) loaded in the closing direction by the working chamber pressure against the pressure in the external pressure chamber and against the force of a spring (23), wherein the valve body (valve head 21) is mechanically connected to an orifice plate (27) which can be bypassed through a throttle gap (28) and which is movably arranged in a chamber (26) positioned in the connecting bore in series with the shutoff valve (21, 22).

2. Compressed air cylinder as defined in Claim wherein the shutaff valve (27, 22) is of small sealing diameter relative to the diameter of the orifice plate (27).

3. Compressed air cylinder as defined in Claim 1 or 2, wherein, relative to the direction of flow from the working chamber to the external pressure chamber (4, 5), the shutoff valve (21, 22) is positioned in the connecting bore upstream of the chamber (26) with the orifice plate (27).

4. Compressed air cylinder as defined in Claim 3, wherein the space (31) adjoining the orifice plate (27) at the working chamber side in the chamber (26) is of a volume sufficient to slow down and settle the air passing through it.

5. Compressed air cylinder as defined in Claim 3 or 4, wherein the valve body designed as a valve head (21) in the shutoff valve (21, 22), and the orifice plate (27) are arranged at either end of a rod (19) which in its centre section is movably mounted in a transverse wall (18) of an essentially plug-like screw part (17) which is screwed coaxially into the piston (2) from the same side as the working chamber (4), the said transverse wall having at the working chamber side a valve seat (22) interacting with the valve head (21) and forming at the other side the boundary of the space (31) which adjoins the orifice plate at the working chamber side.

## Revendications

1. Cylindre à air comprimé, en particulier cylindre de frein à air comprimé pour des installations de freinage de véhicules automobiles, avec un piston (2) limitant une chambre de travail (4) susceptible d'être chargée en air comprimé, par rapport à une chambre à pression extérieure (5) susceptible d'être mise à l'atmosphère par l'intermédiaire d'un dispositif de mise à l'atmosphère (13), et avec un canal de liaison entre la chambre de travail et la chambre à pression extérieure, pontant le piston et dont le passage est contrôlé par la soupape d'arrêt (21, 22) d'une soupape à action différentielle qui comporte un corps de soupape (plateau de soupape 21) déplaçable et chargé dans le sens de la fermeture par la pression qui règne dans la chambre de travail, l'encontre de la pression qui règne dans la chambre à pression extérieure et de la force d'un ressort (23), caractérisé par le fait que le corps de soupape (plateau de soupape 21) est relié mécaniquement à un disque d'activation (27) balayé à l'aide d'une fente d'étranglement et disposé, avec possibilité de déplacement, dans une chambre (26) en série avec la soupape d'arrêt (21, 22) dans le canal de liaison.

2. Cylindre à air comprimé selon la revendication 1, caractérisé par le fait que la soupape d'arrêt (21, 22) possède un petit diamètre d'étanchéité, rapporté au diamètre du disque d'accumulation (27).

3. Cylindre à air comprimé selon la revendication 1 ou 2, caractérisé par le fait que dans le sens de l'écoulement de la chambre de travail (4) à la chambre à pression extérieure (5), la soupape d'arrêt (21, 22) est disposée en amont dans le canal de liaison de la chambre (26) comportant le disque d'accumulation (27).

4. Cylindre à air comprimé selon la revendication 3, caractérisé par le fait que l'espace (31) de la chambre (26), qui avoisine le disque d'accumulation du côté de la chambre de travail, comporte un volume suffisant pour retarder et calmer l'air qui le traverse.

5. Cylindre à air comprimé selon la revendication 3 ou 4, caractérisé par le fait que le corps de soupape de la soupape d'arrêt (21, 22), réalise sous la forme d'un plateau de soupape (21) et le disque d'accumulation (27) sont disposés aux deux extrémités d'une tige (19) qui est montée, par sa section médiane, et de façon déplaçable, dans une paroi transversale (18) d'un élément (17) vissé coaxialement dans le piston (2), à partir du coôté de la chambre de travail et se présentant sensiblement sous la forme d'un bouchon, la paroi transversale comportant du côté de la chambre de travail un siège de soupape (22) qui coagit avec le plateau de soupape (21) et limite d'autre part l'espace (31) qui avoisine le disque d'accumulation, côté chambre de travail.